**Europäisches Patentamt**

**European Patent Office**

**Office européen des brevets**

(11) Veröffentlichungsnummer: **0 303 086**
**A2**

## (12) EUROPÄISCHE PATENTANMELDUNG

(21) Anmeldenummer: 88111906.9

(51) Int. Cl.4: **B29C 45/26 , G11B 11/10**

(22) Anmeldetag: 23.07.88

(30) Priorität: 11.08.87 US 84273

(43) Veröffentlichungstag der Anmeldung:
**15.02.89 Patentblatt 89/07**

(84) Benannte Vertragsstaaten:
**AT BE CH DE ES FR GB IT LI NL SE**

(71) Anmelder: **KERDIX, INC.**
**c/o McCabe & Associates 4840 Riverbend Road**
**Boulder Colorado 80301(US)**

(72) Erfinder: **Muchnik, Boris J.**
**4391 Pali Way**
**Boulder Calorado 80301(US)**
Erfinder: **Fischer, Bernd, Dr.**
**Spessartstrasse 118**
**D-6200 Wiesbaden(DE)**

(74) Vertreter: **Zounek, Nikolai, Dipl.-Ing. et al**
**c/o KALLE Niederlassung der Hoechst AG**
**Patentabteilung Postfach 3540**
**Rheingaustrasse 190 D-6200 Wiesbaden 1(DE)**

(54) Verfahren zum Herstellen eines Trägers für eine magnetooptische Aufzeichnungsschicht, Spritzgiessvorrichtung zum Herstellen eines Trägers sowie Träger für eine magnetooptische Aufzeichnungsschicht.

(57) Ein Verfahren zum Spritzgießen eines Trägers, der als Unterlage für eine magnetooptische Aufzeichnungstruktur dient, arbeitet mit einer Gußform 19; 46, die einen Formenhohlraum 31; 52 aufweist, der eine Gießebene 30; 54 festlegt und der den dünnen scheibenähnlichen Träger 20 ausformt. Die Gußform wird so angeordnet, daß die Gießebene 30; 54 horizontal und eine kreissymmetrische Achse 29; 53 senkrecht zu der Gießebene der Gußform verläuft. Heißes flüsiges Kunststoffmaterial fließt von dem Zentrum der horizontalen Gußform in den Formenhohlraum, wobei das Fließen gleichförmig und radial von dem Zentrum aus nach außen erfolgt, um die Azimutveränderungen der Doppelbrechung möglichst klein zu halten. Neben dem normalen Spritzgießen ist auch Druckspritzgießen anwendbar. Eine Spritzgießvorrichtung zum Herstellen eines Trägers für magnetooptische Aufzeichnungsstrukturen umfaßt eine Gußform und eine Abstützung, um die Gußform mit der Gießebene horizontal zu positionieren. Heißer flüssiger Kunststoff wird in das Zentrum der Gußform, beispielsweise von der vertikalen Symmetrieachse aus, eingespritzt.

Fig.6

## Verfahren zum Herstellen eines Trägers für eine magne-tooptische Aufzeichnungsschicht, Spritzgieß-vorrichtung zum Herstellen eines Trägers sowie Träger für eine magnetooptische Aufzeichnungs-schicht

Die Erfindung betrifft ein Verfahren zum Herstellen eines Trägers für eine magnetooptische Aufzeichnungsschicht und für den Durchlaß von Strahlung zu dieser Schicht für die Aufzeichnung, mit einer scheibenförmigen Gestalt aus Kunststoff, wobei die Scheibe eine erste Planfläche mit einer dazu senkrechten Symmetrieachse besitzt, eine Spritzgießvorrichtung zum Herstellen eines derartigen Trägers für magnetooptische Aufzeichnungsschichten sowie einen Träger für eine magnetooptische Aufzeichnungsschicht.

Die magnetooptische Aufzeichnungstechnologie befindet sich in einer Phase sehr starker Entwicklung durch verschiedene Unternehmen in den Vereinigten Staaten von Amerika, Europa und Japan, wobei dieser Entwicklung die Erwartung zugrundeliegt, in einer auswechselbaren magnetooptischen Platte die Vorteile der hohen Aufzeichnungsdichte der optischen Aufzeichnung mit der Löschbarkeit der herkömmlichen Magnetplattenaufzeichnung zu kombinieren.

In der normalen Praxis bei der Herstellung eines Trägers für eine magnetooptische Aufzeichnungsplatte wird ein transparentes Kunststoffmaterial spritzgegossen, das eine ausgewählte hohe optische Qualität besitzt.

Dabei ergaben sich in der Vergangenheit Schwierigkeiten beim Auffinden von Kunststoffmaterialien, die sowohl hohe optische Qualität als auch mechanische Festigkeit besitzen, da diese beiden Eigenschaften erwünscht sind, wenn der Träger sowohl einen dünnen magnetooptischen Filmaufbau tragen und Strahlungsenergie zu einem derartigen Aufbau zum Aufzeichnen und Auslesen hindurchlassen soll. Beispielsweise können Kunststoffe, wie Polymethylmethacrylat (PMMA), spritzgegossen werden und besitzen ausgezeichnete optische Eigenschaften, sind jedoch in bezug auf die mechanischen Eigenschaften, wie die Dimensionsstabilität beim Auftreten von Temperatur-, Feuchtigkeitsextremen und Zentrifugalkräften wenig geeignet. So ist zum Beispiel PMMA feuchtigkeitsdurchlässig. Falls Feuchtigkeit in den Träger eindringt, kann dadurch die Adhäsion zwischen dem Träger und der aktiven dünnen Aufzeichnungsfilmstruktur geschwächt werden, wodurch die Lebensdauer der Aufzeichnungsplatte verringert wird. Feuchtigkeitseintritt bewirkt desweiteren eine Ausdehnung des Trägers, wodurch die Adhäsion weiter herabgesetzt wird, und es kommt zu Filmrißproblemen. Aus diesem Grund werden Aufzeichnungsplatten, die auf den neuen magnetooptischen Aufzeichnungstechnologien aufbauen, aus anderen Kunststoffen als PMMA hergestellt. Derartige Kunststoffe sind beispielsweise Polykarbonate (PC), die bessere mechanische Eigenschaften in bezug auf die Dimensionsstabilität und geringe Feuchtigkeitsdurchlässigkeit besitzen. Im Vergleich mit PMMA besitzen PC-Träger für magnetooptische Platten ungünstigere optische Eigen schaften, so ist beispielsweise die Doppelbrechung von PC-Trägern größer als diejenige von PMMA-Trägern. Die Doppelbrechung in Kunststoffträgern für magnetooptische Aufzeichnungsmaterialien geht zurück auf die Abhängigkeit des Brechungsindex des gegossenen Kunststoffträgermaterials von der Richtung der Polarisationsebene des Lichtes, das den Träger durchstrahlt. Die Doppelbrechung steht in Beziehung zu Spannungen in dem Kunststoff, die im allgemeinen während des Spritzgießvorgangs entstehen und im Kunststoff gewissermaßen "eingefroren" sind.

Bei der magnetooptischen Aufzeichnung ist die Doppelbrechung unerwünscht. Insbesondere gilt, wie dies bei der magnetooptischen Aufzeichnung im allgemeinen praktiziert wird, daß ein Lichtstrahl oder Strahlung im nahen Infrarotbereich durch den transparenten Kunststoffträger der magnetooptischen Aufzeichnungsplatte hindurch auf eine aktive Schicht der magnetooptischen dünnen Filmstruktur fokussiert wird. Die aktive Schicht besteht aus einem Magnetmaterial, dessen Magnetisierung in eine Richtung senkrecht zu der Ebene des Trägers verläuft, wenn die magnetooptische Aufzeichnungsplatte gelöscht wird, bevor eine erste Aufzeichnung erfolgt. Der Lichtstrahl oder die Strahlung, weiterhin als Schreibstrahl bezeichnet, wird bei Anwesenheit eines kleinen Magnetfeldes, dessen Richtung entgegengesetzt zu der Magnetisierung ist, wirksam, um kleine Aufzeichnungsstellen der aktiven Schicht zu erhitzen. Daraus resultiert eine Umkehr der Magnetisierungsrichtung an den aufgeheizten Stellen, da die Magnetisierung in Richtung des äußeren Magnetfeldes ausgerichtet wird. Bei einer derartigen Anwendung bildet der Träger nicht nur die Stützunterlage für die dünne Magnetfilmstruktur, sondern bewirkt auch eine Defokussierung gegenüber kleinen Staubpartikeln zum Verbessern der Lesegenauigkeit der kleinen Aufzeichnungsstellen. Die magnetooptische Aufzeichnungsplatte wird durch einen anderen Lichtstrahl ausgelesen, wobei der Lesestrahl der gleiche wie der Schreibstrahl sein kann, dann jedoch verringerte Intensität besitzt und nicht moduliert ist. Der Lesestrahl, der linear polarisiert ist, wird auf der aktiven Schicht fokussiert und von dieser reflektiert. Abhängig von der Richtung oder Orientierung nach oben oder nach unten der Magnetisierung an einer vorgegebenen Stelle wird die Polarisationsebene des Lesestrahls geringfügig im Uhrzeigersinn oder im Gegen-Uhrzeigersinn gedreht. Diese Polarisationsdrehung wird als "polarer Kerr-magnetooptischer Effekt" bezeichnet. Doppelbrechung in dem Träger bewirkt eine unerwünschte, zusätzliche Drehung der Polarisationsebene des Lesestrahls, die sich zu den Signalpolarisationsdrehungen, erzeugt durch den magnetooptischen Kerr-Effekt, hinzuaddiert, wodurch es zu einer unerwünschten Störung oder zu dem sogenannten "Polarisationsrauschen" in dem detektierten magnetooptischen Signal kommt.

Bei Versuchen zum Verarbeiten detektierter magnetooptischer Signale von magnetooptischen Aufzeichnungsplatten, die Träger mit sich ändernder Doppelbrechung von einer Aufzeichnungsstelle zu der anderen Aufzeichnungsstelle besitzen, wurde gefunden, daß der Einfluß von variierenden Doppelbrechungen sich in einer Weise auswirkt, daß zu dem Signal sowohl hochfrequente rauschähnliche Störungen als auch niederfrequente Grundpegelveränderungen hinzuaddiert werden. Durch Signalverarbeitung, wie beispielsweise durch elektronische Hochpaßfilter, kann man das Signal von den niederfrequenten Komponenten abtrennen, ist jedoch nicht imstande, die rauschähnlichen Komponenten mit hochfrequenten Anteilen innerhalb der Signalbandbreite von dem Signal zu trennen.

Bei spritzgegossenen Polykarbonatträgern für magnetooptische Aufzeichnungsschichten wurde beobachtet, daß die voranstehend beschriebenen Änderungen des Signals auf die Doppelbrechung zurückzuführen sind, und es wurden verstärkte Anstrengungen gemacht, um einen magnetooptischen Aufzeichnungsträger mit den gewünschten optischen, mechanischen oder sonstigen Eigenschaften zu entwickeln. Um die Nachteile herkömmlicher Polykarbonatträger für magnetooptische Aufzeichnungsschichten zu beseitigen, wurde eine detaillierte Analyse der Veränderungen der Doppelbrechung auf einem Polykarbonatträger für magnetooptische Aufzeichnungsschichten vorgenommen. Im Rahmen dieser Untersuchungen wurden auch Veränderungen von Träger zu Träger analysiert. Dabei wurde festgestellt, daß eine signifikante Ähnlichkeit der Veränderungen von Träger zu Träger innerhalb einer Anzahl von gleichen Trägern auftritt, die darin besteht, daß sich die Veränderung der Doppelbrechung als Funktion der Umfangsposition (Winkel- bzw. Azimutposition) entlang dem Trägerumfang ergibt. Insbesondere macht sich diese Veränderung in der Doppelbrechung bei Änderung entlang des Grundpegels des Signals bemerkbar und wird als die "Kennung" des Trägers bezeichnet. Nachdem eine derartige Ähnlichkeit der Kennung der Doppelbrechung beim Grundpegel des Signals von Träger zu Träger festgestellt wurde, wurden verstärkte Anstrengungen unternommen, um die Ursache dieser konsistenten Veränderungen herauszufinden.

Aufgabe der Erfindung ist es, ein Verfahren zum Herstellen eines Trägers für eine magnetooptische Aufzeichnungsschicht zu schaffen, bei dem unerwünschte Veränderungen der Doppelbrechung des Trägers vermieden werden und der Träger die gewünschten mechanischen Eigenschaften und verbesserte optische Eigenschaften besitzt. Im Rahmen der Erfindung soll auch eine Spritzgießmaschine zum Herstellen eines derartigen Trägers für magnetooptische Aufzeichnungsschichten geschaffen werden.

Diese Aufgabe wird erfindungsgemäß dadurch gelöst, daß eine Gußform mit einem Formenhohlraum zum Formen des Trägers als dünne Scheibe, die die plane Fläche und die dazu senkrechte Symmetrieachse festlegt, horizontal angeordnet wird, so daß die Symmetrieachse vertikal ausgerichtet ist, und daß heißer, flüssiger Kunststoff entlang der Symmetrieachse in die horizontal angeordnete Gußform eingeleitet wird, so daß der flüssige Kunststoff von dem Zentrum der Gußform gleichförmig und radial nach außen strömt, wodurch die Veränderung in der Doppelbrechung des erhaltenen Trägers möglichst klein gehalten wird.

Bei dem erfindungsgemäßen Verfahren wird beispielsweise der flüssige Kunststoff in die Gußform eingespritzt. Der flüssige Kunststoff wird in Weiterführung des Verfahrens durch Komprimieren und Erhitzen eines Rohlings des Kunststoffmaterials erzeugt.

In Ausgestaltung des Verfahrens erfolgt das Fließen des Kunststoffs in die Gußform in einer Weise, daß der erzeugte Träger nur sehr kleine Azimutänderungen in der Doppelbrechung aufweist. Beispielsweise wird der heiße flüssige Kunststoff in das Zentrum der Gußform eingespritzt, und das radiale und gleichförmige nach außen Fließen des Kunststoffes geschieht weitgehend unabhängig von der Schwerkraft, um die Änderungen der Doppelbrechung möglichst klein zu halten. Ebenso ist es möglich, daß durch Komprimieren und Erhitzen eines Preßlings aus Kunststoff innerhalb der Gußform eine gleichförmige Flüssigkeit erschmolzen und das Fließen des Kunststoffs erreicht wird und daß das radiale und gleichförmige Fließen nach außen weitgehend unabhängig von der Schwerkraft erfolgt, um die Änderungen der Doppelbrechung möglichst klein zu halten.

In Weiterführung des Verfahrens ist in einer Gußform, mit einem Formenhohlraum für den Träger, in dem Formenhohlraum eine Gießebene entsprechend der planen Fläche des Trägers vorhanden, wobei die Gußform einen Einguß im Zentrum des Formenhohlraums aufweist, wird die Gußform mit ihrer Gießebene horizontal ausgerichtet und der heiße flüssige Kunststoff in die Gußform über den zentralen Einguß eingespritzt, um eine radiale Symmetrie des Horizontalflusses des eingespritzten heißen flüssigen Kunststoffes in die Gußform zu unterstützen. Der Kunststoff ist zweckmäßigerweise Polykarbonat, und die radiale Symmetrie des Fließens des Kunststoffes wird weitgehend unabhängig von der Schwerkraft gehalten, um die Doppelbrechung des Trägers rings um die Achse unabhängig von der Winkelstellung zu halten.

Eine Spritzgießvorrichtung zum Herstellen eines Trägers für magnetooptische Aufzeichnungsschichten, wobei der Träger plan und kreissymmetrisch in bezug auf eine Symmetrieachse ausgebildet ist, zeichnet sich dadurch aus, daß eine Gußform mit einem Formenhohlraum zum Ausbilden des Trägers vorhanden ist, daß der Formenhohlraum plan ist und ein Zentrum korrespondierend zu der Symmetrieachse aufweist, daß ein Hydraulikmechanismus die Gußform mit der Gießebene horizontal ausrichtet und daß eine Schnecke über einen Rohrkrümmer heißen flüssigen Kunststoff in das Zentrum der Gußform einspritzt, so daß der Kunststoff radial und gleichmäßig durch die Gußform strömt, wodurch die Änderungen an der Doppelbrechung des Trägers minimal sind.

Anstelle einer herkömmlichen Spritzgießvorrichtung kann auch eine Druckspritzgießvorrichtung zum Herstellen eines Trägers für magnetooptische Aufzeichnungsschichten verwendet werden, wobei der Träger plan und kreissymmetrisch in bezug auf eine Symmetrieachse ausgebildet ist, und die Spritzgießvorrichtung eine Druckspritzgießvorrichtung mit einer zweiteiligen Gußform ist, die aus einem feststehenden Teil und einem beweglichen Teil besteht, wobei in die geöffnete Gußform zentral in einen Formenhohlraum ein Rohling aus heißem, vorgeformtem Kunststoff eingebracht wird, der beim Schließen der Gußform erhitzt und flüssig wird, und der flüssige Kunststoff horizontal, symmetrisch und radial durch den Formenhohlraum bis zur Außenkante des Formenhohlraums fließt.

Ein Träger für eine magnetooptische Aufzeichnungsschicht und für den Durchlaß von Strahlung zu dieser Schicht für die Aufzeichnung, mit einer scheibenförmigen Gestalt aus Kunststoff, wobei die Scheibe eine Planfläche mit einer dazu senkrechen Symmetrieachse besitzt, zeichnet sich dadurch aus, daß der Träger vernachlässigbar kleine Änderungen der Doppelbrechung aufweist, daß die Planfläche die Unterseite des Trägers und eine mit Nuten ausgestattete, der Planfläche gegenüberliegende Fläche die Oberseite des Trägers bildet und daß der Träger aus Polykarbonat besteht. Die Dicke des Trägers kann beispielsweise bis 2 mm, insbesondere 1,2 mm, betragen, und der Trägerdurchmesser ist bis zu 130 mm groß. Ein derartiger magnetooptischer Träger weist eine relativ sehr große Gleichförmigkeit der Doppelbrechung in bezug auf die Azimutdoppelbrechungscharakteristik auf.

Die Erfindung wird im folgenden anhand von zeichnerisch dargestellten Ausführungsbeispielen näher erläutert. Es zeigen:

Fig. 1 eine Draufsicht auf einen herkömmlichen Träger für die magnetooptische Aufzeichnung, mit zwei Azimut- oder Winkelpositionen, die über den Umfang des Trägers verteilt sind,

Fig. 2 den Verlauf eines Signals, das durch einen Lesestrahl von der magnetooptischen Aufzeichnungsplatte ausgelesen wird, die einen Träger nach Fig. 1 aufweist, wobei die Amplitude des Lesesignals über der Azimutstellung entlang dem Umfang der Aufzeichnungsplatte als sogenannte Doppelbrechung-Kennung aufgetragen ist,

Fig. 3A und 3B Drauf- und Seitenansicht eines Trägers nach der Erfindung, der eine magnetooptische Aufzeichnungsstruktur trägt, wobei dieser Träger eine gleichförmige Azimutdoppelbrechung-Charakteristik besitzt,

Fig. 4 den Verlauf eines Signals, das durch einen Lesestrahl von einer magnetooptischen Aufzeichnungsplatte ausgelesen wird, die den Träger nach den Figuren 3A und 3B enthält, mit einer Doppelbrechung-Kennung, die weitgehend unabhängig von der Azimutposition entlang dem Umfang der Aufzeichnungsplatte ist,

Fig. 5 eine Seitenansicht einer Spritzgießvorrichtung zum Herstellen des in den Figuren 3A und 3B gezeigten Trägers,

Fig. 6 eine Detailansicht im Schnitt der Spritzgießvorrichtung nach Fig. 5, mit einer horizontal ausgerichteten Gußform für die Aufnahme des heißen flüssigen Kunststoffes, der aus einem zentralen Einguß einströmt,

Fig. 7 eine Schnittansicht entlang der Linie 7-7 in Figur 6, aus welcher die Zeitabfolge des horizontal und radial gleichförmigen, symmetrischen Flusses des heißen flüssigen Kunststoffes von dem Einguß nach außen innerhalb der in Fig. 6 gezeigten Gußform dargestellt ist, um den Träger, gezeigt in den Figuren 3A und 3B, für eine magnetooptische Aufzeichnungsschicht, herzustellen,

Fig. 8 eine Seitenansicht einer Druckspritzgießvorrichtung mit einer horizontal ausgerichteten Gußform, und

Fig. 9 eine vergrößerte Ansicht der Gußform der Druckspritzgießvorrichtung nach Fig. 8, mit einem erhitzten Rohling aus Kunststoff, der weiter erhitzt und verflüssigt wird, so daß ein horizontaler, radialer und symmetrischer Fluß des flüssigen Kunststoffs in die Gußform zum Ausbilden des in den Figuren 3A und 3B dargestellten Trägers entsteht.

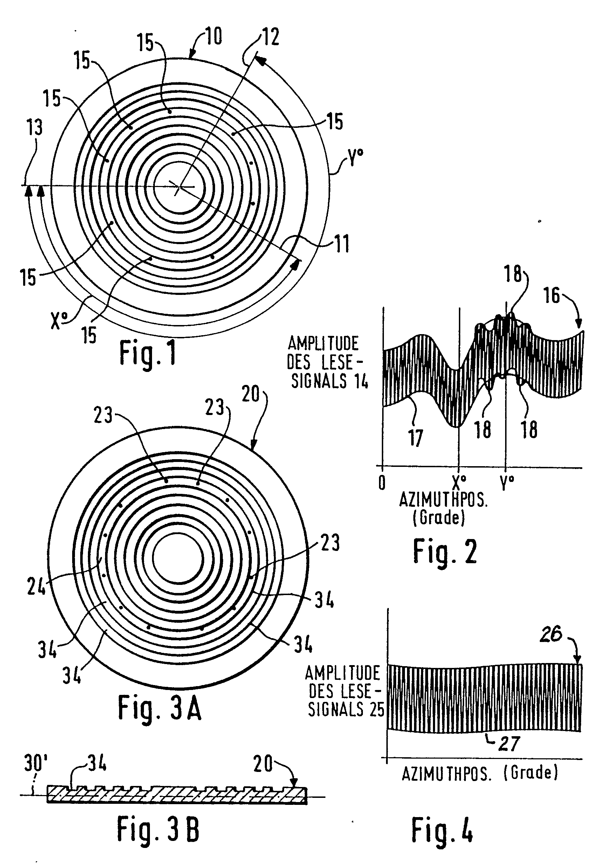

Anhand von Fig. 1, die einen spritzgegossenen Polykarbonatträger für eine magnetooptische Aufzeichnungsplatte zeigt, wird die Veränderung der Doppelbrechung über den Umfang der Platte diskutiert. Es wurde eine detaillierte Analyse an einem Träger aus einer Anzahl von Polykarbonatträgern 10 für magnetooptische Aufzeichnungsplatten und eine Untersuchung der Veränderungen von Träger zu Träger durchgeführt. Dabei zeigt sich eine unterscheidbare Ähnlichkeit von Träger 10 zu Träger 10 in der Veränderung der Doppelbrechung als Funktion der Umfangsposititon bzw. der Winkel- oder Azimutposition entlang den Trägern 10. Umfangs-, Winkel- oder Azimutpositionen sind in Fig. 1 durch radiale Linien 11 und 12 und deren Lage gegenüber einer Bezugslinie 13 dargestellt. Die Linie 11 besitzt eine Winkel- oder Azimutposition $X^0$ von der Bezugslinie 13 und die Linie 12 schließt einen Winkel $Y^0$ mit der Bezugslinie 13 ein. In Figur 2 ist ein typisches Lesesignal 14 als Ausgangssignal eines nicht dargestellten Detektors abgebildet, der eine Anzahl von Aufzeichnungsstellen 15-15 abgetastet hat, die umfangsmäßig oder azimutmäßig vonein ander auf der Aufzeichnungsplatte 10 beabstandet sind. Auf der Vertikalachse des Diagramms in Figur 2 ist die Amplitude des Lesesignals 14 aufgetragen, die eine Funktion der Drehungen der Polarisationsebene des nicht dargestellten Lesestrahls ist, der von der magnetooptischen Aufzeichnungsplatte reflektiert wird. Diese Drehungen werden sowohl durch den Kerr-Effekt, der aus der Aufwärts- und Abwärtsrichtung der Magnetisierung der Aufzeichnungsstellen 15-15 resultiert, als auch durch unerwünschte Änderungen der Doppelbrechung verursacht. Eine Trägerwelle 16 des Lesesignals 14 besitzt eine Basislinie oder einen Schwarzwertpegel 17 mit einer Amplitude, die sich mit der Winkelposition, die auf der Abszisse aufgetragen ist, ändert, als Folge der Azimutveränderungen in der Doppelbrechung des Trägers 10. Somit ist die Doppelbrechung beim Winkel $X^0$ - (Linie 11) verschieden von der Doppelbrechung beim Winkel $Y^0$ (Linie 12), was durch die unterschiedlichen Amplituden der Basislinie 17 an den Stellen $X^0$ und $Y^0$ in Figur 2 angezeigt ist.

Bei der Herstellung bzw. beim Ausformen des bekannten Trägers 10 ist die Aufzeichnungsstelle 15 auf der Linie 12 senkrecht von der Aufzeichnungsstelle 15 auf der Linie 11 beabstandet. Das besondere Variationsmuster in der Amplitude des Schwarzwertpegels 17 in Abhängigkeit von der Winkel- oder Azimutposition entlang dem Träger 10 wird als Doppelbrechung-Kennung bezeichnet, die auf die Doppelbrechung-Veränderungen zurückzuführen ist, bewirkt durch die Vertikalausrichtung des Trägers 10 während des Gießvorgangs zu seiner Herstellung.

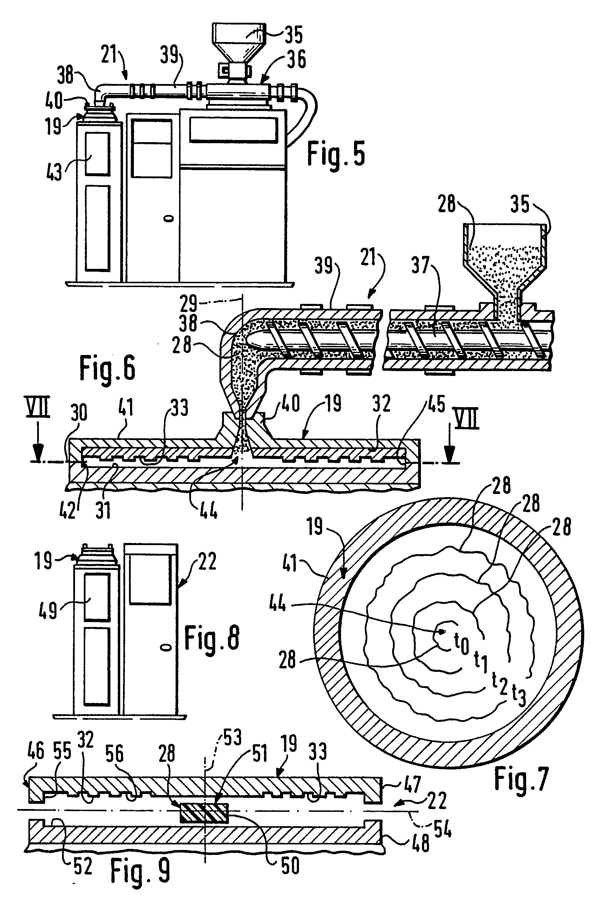

Die mehr oder weniger reproduzierbare Doppelbrechung-Kennung umfaßt relativ niederfrequente Komponenten der Doppelbrechung-Veränderung, dargestellt durch die niederfrequente Veränderung der Amplitude des Schwarzwertpegels 17. Ebenso ist der Figur 2 zu entnehmen, daß höherfrequente Komponenten 18 der Doppelbrechung-Variation irregulären oder möglicherweise turbulenten Strömungen beim Auffüllen einer nicht gezeigten Gußform zuzuordnen sind, die vertikal ausgerichtet und zum Gießen des bekannten Trägers 10 verwendet wird. Die höherfrequenten Komponenten 18 sind nur mit Schwierigkeit als Teil der Doppelbrechung-Kennung zu identifizieren, sie tragen jedoch zu einer unerwünschten Störung oder unerwünschtem Rauschen, dem sogenannten "Polarisationsrauschen" in dem wiedergegebenen Lesesignal 14 bei. Nach der Erfindung werden verbesserte Fließcharakteristiken beim Einfüllen eines flüssigen Kunststoffs in eine horizontal ausgerichtete Gußform 19 (Figuren 6 und 9), im Vergleich zu dem Auffüllen einer nicht gezeigten, vertikal ausgerichteten Gußform im Stand der Technik, erzielt und führen zu einem wesentlich verringerten Polarisationsrauschen. Die hochfrequenten Komponenten 18 des Polarisationsrauschens bereiten größere Schwierigkeiten als die niederfrequenten Komponenten der Doppelbrechung-Kennung, da die ersteren einer Trennung von dem Lesesignal 14 mittels elektronischer Filterung schwerer zugänglich sind, da sie innerhalb des gleichen Frequenzbandes wie die Signalkomponenten liegen.

In den Figuren 3A und 3B ist ein Träger 20 gezeigt, der nach dem erfindungsgemäßen Verfahren mit Hilfe einer Spritzgießvorrichtung 21 (Figuren 5, 6 und 7) oder einer Druckspritzgießvorrichtung 22 (Figuren 8 und 9) spritzgegossen wird. Der Träger 20 besitzt eine weitgehend gleichförmige, azimutale Doppelbrechung-Charakteristik. Diese bedeutet, daß Aufzeichnungsstellen 23-23 entlang einem kreisförmigen, azimutalen Pfad 24 keine größere Doppelbrechung-Abweichung, bedingt durch den Träger 20 oder durch dessen Herstellung, zeigen. Bei einem derartigen Träger hängt die Drehung der Polarisationsebene eines nicht gezeigten, linear polarisierten Lesestrahls im sichtbaren Bereich weitgehend nur von dem Kerr-Effekt ab, der aus den Orientierungen der Magnetisierung auf den Aufzeichnungsstellen 23-23 resultiert, und nicht von der Doppelbrechung des Materials, aus dem der Träger 20 hergestellt ist. Dies ist in Figur 4 dargestellt, welche gleichfalls die Amplitude des Lesesignals in Abhängigkeit von der Azimutposition wie in Figur 2 zeigt, jedoch für ein Lesesignal 25, das von einer nicht gezeigten Aufzeichnungsplatte erhalten wird, die den Träger 20 umfaßt. Die in Figur 4 dargestellten Daten zeigen auf, daß eine Trägerwelle 26 des Lesesignals 25 eine Basislinie bzw. einen Schwarzwertpegel 27 mit einer Amplitude aufweist, die sich nur unwesentlich in bezug auf die Azimutposition verändert. Desweiteren ist zu erkennen, daß das Lesesignal 25 keine wesentlichen höherfrequenten Komponenten aufweist, die mit den hochfrequenten Komponenten 18 des Lesesignals 14 der Figur 2 vergleichbar wären.

Der Träger 20 nach der Erfindung wird unter Verwendung der Spritzgießvorrichtung 21 oder 22 gemäß den Figuren 5 und 6 bzw. 8 und 9 hergestellt. In den beiden Vorrichtungen 21 und 22 wird ein Polykarbonatmaterial 28 zentral in der Gußform 19 im wesentlichen an der Stelle angeordnet, an der eine Vertikalachse 29 eine Horizontalebene 30 schneidet, die durch einen Formenhohlraum 31 der Gußform 19 festgelegt ist. Aus den Figuren 3A und 3B ist zu entnehmen, daß der Träger 20 dünn und scheibenähnlich ausgebildet ist, so daß der Träger 20 im wesentlichen eine Ebene festlegt, die in Figur 3B durch die Linie 30' angedeutet ist. Das Polykarbonatmaterial wird erhitzt und flüssig gemacht und bewegt sich in diesem Zustand von der zentralen Vertikalachse 29 horizontal durch den Formenhohlraum 31 der Gußform 19 symmetrisch und radial, weitgehend unabhängig von Einflüssen der Schwerkraft, die normalerweise auf ein derartiges heißes flüssiges Polykarbonatmaterial 28 einwirkt, wenn die Gußform vertikal angeordnet ist. Da der radiale, symmetrische und horizontale Fluß daraus resultiert, daß der Einfluß der Schwerkraft auf das Material 20, das den Träger 20 formt, weitgehend vernachlässigbar ist, anders als im Falle eines vertikalen Flusses des flüssigen Kunststoffes, bei dem stets die Tendenz auftritt, daß sich das heiße flüssige Kunststoffmaterial 28 nur auf eine Seite der Gußform 19 hin bewegt. Durch das horizontale Fließen des Kunststoffes wird die voranstehend beschriebene Charakteristik des Trägers 20, gezeigt in Figur 4, erhalten, die im Vergleich zu der unerwünschten Doppelbrechung-Kennung, gezeigt in Figur 2, des herkömmlichen Trägers 10, wesentlich günstigere Aufzeichnungseigenschaften gewährleistet.

Der Formenhohlraum 31 hat beispielsweise einen Durchmesser von 130 mm, kann jedoch auch bis zu 300 mm Durchmesser besitzen, und die Dicke in Vertikalrichtung beträgt 1,2 mm, um einen Träger 20 mit vergleichbaren Abmessungen herzustellen. Das Kunststoffmaterial 28, aus dem der Träger 20 gegossen wird, ist beispielsweise Merlon CD-2000, Polykarbonatharz, das für die Verwendung in optischen Speicherträgern entwickelt wurde. Es handelt sich hierbei um ein Produkt der US-Firma Mobay Chemical Corporation. In einer bevorzugten Ausführungsform ist eine Seite 32 der Gußform 19 mit einer genuteten Metallprägeform 33 ausgerüstet, um Nuten 34 in dem Träger 20 zu formen, die in bekannter Weise zur Spurführung des Lesestrahls dienen.

Die Spritzgießvorrichtung 21, gezeigt in den Figuren 5 und 6, kann beispielsweise eine bekannte Spritzgießvorrichtung sein, die für die erfindungsgemäße Anwendung modifiziert ist. Die Spritzgießvorrichtung umfaßt einen Vorratsbehälter 35, der das Kunststoffmaterial 28, beispielsweise Polykarbonatharz, einem Heiz- und Mischsystem 36 zuleitet, das eine Schnecke 37 (Figur 6) für den Weitertransport des heißen flüssigen Polykarbonatmaterials 28 zu der Gußform 19 umfaßt. Die bekannte Spritzgießvorrichtung 21 wird durch einen 90°-Rohrkrümmer 38 in einem beheizten Zylinder 39 modifiziert, um das heiße flüssige Polykarbonatmaterial 28 nach unten in einen Einguß 40 (Figur 6) der Gußform 19 umzulenken. Die Gußform 19 besteht aus zwei Teilen, einem ersten, feststehenden Teil 41 und einem zweiten Teil 42, der von dem ersten Teil 41 mittels eines Hydraulikmechanismus 43 trennbar ist. Wie in den Figuren 5 und 6 gezeigt ist, bilden die zwei Teile 41 und 42 der Gußform 19, wenn sie geschlossen sind, den Formenhohlraum 31 und legen die plattenähnliche Ebene 30 (siehe Fig. 6) fest, die horizontal und senkrecht zu der Vertikalachse 29 verläuft. Diese Ebene 30 innerhalb des Formenhohlraums 31 entspricht der in Figur 3B gezeigten Ebene 30' des fertiggestellten Trägers 20. Das heiße flüssige Polykarbonatmaterial 28 wird entlang der Vertikalachse 29 in das Zentrum 44 der Gußform 19 eingespritzt. Wie in Fig. 7 gezeigt ist, bewegt sich mit fortschreitender Zeit von $t_0$ bis $t_3$ das eingespritzte heiße flüssige Material 28 symmetrisch und radial nach außen, weitgehend unabhängig von Einflüssen der Schwerkraft, die ansonsten auf ein derartig heißes, flüssiges Kunststoffmaterial 28 einwirkt, wenn die Gußform 19 senkrecht angeordnet ist. Das heiße flüssige Polykarbonatmaterial 28 fließt nach außen zu der Außenkante 45 des Formenhohlraums 31 und kühlt anschließend ab. Da die Abkühlung unter Bedingungen erfolgt, unter denen der Einfluß der Schwerkraft vernachlässigbar in bezug auf das Fließen der Flüssigkeit in der Horizontalebene 30 der Gußform 19 ist, erfolgt die Abkühlung des heißen flüssigen Kunststoffmaterials 28, ohne daß die Schwerkraft das Material 28 gegen einen Teil der Außenkante 45 der Gußform 19 drückt, was normalerweise der Fall ist, wenn die Gußform 19 senkrecht angeordnet ist. Daraus resultiert, daß eine Charakteristik, wie in Figur 4 gezeigt, für eine magnetooptische Aufzeichnungsplatte erhalten wird, wenn der Träger 20 verwendet wird, der mittels der Vorrichtung 21 gemäß den Figuren 5 und 6 spritzgegossen wird.

In diesem Zusammenhang ist darauf hinzuweisen, daß die Viskosität des Kunststoffmaterials 28 mit steigender Temperatur abnimmt, so daß innerhalb von Grenzen die Viskosität während des Spritzgießens in der Gußform 19 durch die Regelung der Temperaturen des Eingusses und der Gußform gesteuert werden muß. Es gibt daher bestimmte Beschränkungen bezüglich des anwendbaren Bereiches für die Temperaturen und die Viskositäten. Niedrigere Temperaturen und somit höhere Viskosität führen zu Bedingungen, unter denen die Viskositätskräfte vollständig über die Einflüsse infolge der Schwerkraft dominieren, selbst im Falle einer vertikal angeordneten Gußform. Um jedoch schnelles Spritzgießen und niedrigere Spannungen, beispielsweise Scherkräfte auf dem Kunststoff, zu erreichen, sind eine größere Fluidität und somit höhere Temperaturen erforderlich. Somit müssen die Verfahrenstemperaturen und die Einspritzgeschwindigkeit für ein bestimmtes Kunststoffmaterial 28 und ein vorgegebenes Molekulargewicht des Materials 28 experimentell optimiert werden, um die beste Gesamtspritzgießcharakteristik zu erreichen. Wenn ein wichtiger Parameter dieser Charakteristik die Doppelbre chung ist, wie im Falle von Trägern 20 für magnetooptische Aufzeichnungsplatten, eliminiert die horizontale Gußform 19 radiales asymmetrisches Fließen des Kunststoffes infolge der Schwerkraft, die andererseits zu Azimutveränderungen in der Doppelbrechung führt, wie voranstehend erläutert wurde. Daraus folgt, daß mit der horizontalen Gußform 19 höhere Temperaturen oder niedrigere Schmelzviskositäten vorteilhafterweise in bezug auf die Einspritzgeschwindigkeit und die Spannungen in dem spritzgegegossenen Träger 20 angewandt werden können.

Der Träger 20 nach der Erfindung kann auch mit Hilfe der Druckspritzgießvorrichtung 22 gemäß Fig. 8 hergestellt werden. Diese Vorrichtung 22 umfaßt die für den Druckspritzguß adaptierte Gußform 19, die weiterhin als zweiteilige Gußform 46 bezeichnet wird. Die Gußform 46 besteht aus einem feststehenden Teil 47 und einem beweglichen Teil 48. Der bewegliche Teil 48 wird durch einen Hydraulikmechanismus 49 betätigt, der die beiden Teile 47 und 48 voneinander trennt bzw. diese zusammenfügt. Im getrennten Zustand der beiden Teile 47 und 48 wird ein Rohling 50 aus heißem vorgeformten Polykarbonatmaterial 28 (Fig. 9) zentral in die Gußform 46 an eine Stelle 51 eingeschoben, an der ein Formenhohlraum 52 der Gußform 46 durch eine Vertikalachse 53, die kreisförmig symmetrisch bezüglich des Formenhohlraums verläuft, geschnitten wird. Sobald die beiden Teile 47 und 48 der Gußform 46 mit dem zwischen ihnen befindlichen Rohling 50 zusammengefügt sind, wobei eine Gieß ebene 54 der Gußform 46 horizontal und senkrecht zu der Vertikalachse 53 verläuft, wird der Rohling 50 des Kunststoffmaterials 28 erhitzt und wird flüssig. Das heiße flüssige Polykarbonatmaterial 28 wird dazu gezwungen, horizontal und symmetrisch sowie radial in einer Weise, die ähnlich derjenigen ist, die anhand von Figur 7 gezeigt und beschrieben wurde, durch den Formenhohlraum 52 der Gußform 46 von der zentralen Stelle 51 zu der Außenkante 55 des Formenhohlraums 52 zu fließen, um den Träger 20 nach der Erfindung zu bilden. Nachdem der Träger 20 abgekühlt ist, wird das Teil 48 der Gußform 46 nach unten bewegt, um so den Träger 20 aus dem Formenhohlraum 52 entnehmen zu können.

Die Verfahrenstemperaturen und die Schließgeschwindigkeit der beiden Teile 47 und 48 werden entsprechend dem Typ und dem Molekulargewicht des Materials 28 gesteuert, um unter Verwendung der horizontalen Gußform 46 Spritzgießcharakteristiken zu erreichen, die konsistent und ähnlich denjenigen sind, die unter Bezugnahme auf die Vorrichtung 21 voranstehend beschrieben wurden.

Für die Herstellung des Trägers 20, der zum Abstützen einer magnetooptischen Aufzeichnungsfilmstruktur verwendet wird, wird eine der zuvor beschriebenen Gußformen 19 oder 46 mit einem entsprechenden Formenhohlraum 31 bzw. 52 verwendet. Jeder dieser Formenhohlräume 31 bzw. 52 ist so geformt, daß der Träger 20 in Gestalt einer dünnen Scheibe ausgebildet wird. Die Gußform 19 bzw. 46 wird mit der Ebene 30 bzw. 54 horizontal ange ordnet, wobei die Achse 29 bzw. 53, die kreisförmig symmetrisch zu dem Formenhohlraum verläuft, senkrecht ausgerichtet ist. Diese Anordnung unterscheidet sich von der vertikalen Ausrichtung der Ebene des Formenhohlraums der Gußformen, die zur Herstellung von bekannten Trägern 10 eingesetzt werden. Bei horizontaler und geschlossener Gußform im Falle der Gußform 19 oder, sobald die Gußform geschlossen ist, im Falle der Druckgußform 46, fließt heißes, flüssiges Polykarbonatmaterial 28 von der Achse 29 bzw. 53 durch den Formenhohlraum 31 bzw. 52 in horizontaler Richtung symmetrisch und radial nach außen. Das heiße Kunststoffmaterial 28 fließt gleichförmig und radial nach außen, wie dies in Fig. 7 gezeigt ist, und daraus resultiert der Träger 20, der minimale Azimutveränderungen in der Doppelbrechung aufweist. Das Verfahren nach der Erfindung unter Einsatz der Vorrichtung 21 oder 22 ermöglicht eine breite Auswahl von Materialien 28, die zur Herstellung des Trägers 20 geeignet sind. Beispielsweise können vorteilhafterweise Materialien mit einer niedrigeren Schmelzviskosität bei einer vorgegebenen Temperatur oder mit niedrigerem Molekulargewicht eingesetzt werden, da keine Notwendigkeit besteht, daß die Viskositätskräfte hoch sein müssen, um den Einfluß der Schwerkraft zu eliminieren.

## Ansprüche

1. Verfahren zum Herstellen eines Trägers für eine magnetooptische Aufzeichnungsschicht und für den Durchlaß von Strahlung zu dieser Schicht für die Aufzeichnung, mit einer scheibenförmigen Gestalt aus Kunststoff, wobei die Scheibe eine erste Planfläche mit einer dazu senkrechten Symmetrieachse besitzt, dadurch gekennzeichnet, daß eine Gußform mit einem Formenhohlraum zum Formen des Trägers als Dünnscheibe, die die Planfläche und die dazu senkrechte Symmetrieachse festlegt, horizontal angeordnet wird, so daß die Symmetrieachse vertikal ausgerichtet ist, und daß heißer, flüssiger Kunststoff entlang der Symmetrieachse in die horizontal angeordnete Gußform eingeleitet wird, so daß der flüssige Kunststoff von dem Zentrum der Gußform gleichförmig und radial nach außen strömt, wodurch die Veränderung in der Doppelbrechung des erhaltenen Trägers möglichst klein gehalten wird.

2. Verfahren nach Anspruch 1, dadurch gekennzeichnet, daß der flüssige Kunststoff in die Gußform eingespritzt wird.

3. Verfahren nach Anspruch 1, dadurch gekennzeichnet, daß der flüssige Kunststoff durch Komprimieren und Erhitzen eines Rohlings des Kunststoffmaterials erzeugt wird.

4. Verfahren nach Anspruch 1, dadurch gekennzeichnet, daß das Fließen des Kunststoffs in die Gußform in einer Weise erfolgt, daß der erzeugte Träger nur sehr kleine Azimutänderungen in der Doppelbrechung aufweist.

5. Verfahren nach Anspruch 2, dadurch gekennzeichnet, daß der heiße flüssige Kunststoff in das Zentrum der Gußform eingespritzt wird und daß das radiale und gleichförmige nach außen Fließen des Kunststoffs weitgehend unabhängig von der Schwerkraft geschieht, um die Änderungen der Doppelbrechung möglichst klein zu halten.

6. Verfahren nach Anspruch 2, dadurch gekennzeichnet, daß durch Komprimieren und Erhitzen eines Preßlings aus Kunststoff innerhalb der Gußform eine gleichförmige Flüssigkeit erschmolzen und das Fließen des Kunststoffs erreicht wird und daß das radiale und gleichförmige Fließen nach außen weitgehend unabhängig von der Schwerkraft erfolgt, um die Änderungen der Doppelbrechung möglichst klein zu halten.

7. Verfahren zum Herstellen eines scheibenförmigen Spritzgruß-Kunststoffträgers für magnetooptische Aufzeichnungen, der eine Dicke bis zu 2 mm und eine Planfläche aufweist, mit einer dazu senkrecht gerichteten, kreissymmetrischen Achse, dadurch gekennzeichnet, daß in einer Gußform, mit einem Formenhohlraum für den Träger, in dem Formenhohlraum eine Gießebene entsprechend der Planfläche des Trägers vorhanden ist, wobei die Gußform einen Einguß im Zentrum des Formenhohlraums aufweist, daß die Gußform mit ihrer Gießebene horizontal ausgerichet wird und daß der heiße flüssige Kunststoff in die Gußform über den zentralen Einguß eingespritzt wird, um eine radiale Symmetrie des Horizontalflusses des eingespritzten heißen flüssigen Kunststoffes in die Gußform zu unterstützen.

8. Verfahren nach Anspruch 7, dadurch gekennzeichnet, daß der Kunststoff Polykarbonat ist und daß die radiale Symmetrie des Fließens des Kunststoffes weitgehend unabhängig von der Schwerkraft gehalten wird, um die Doppelbrechung des Trägers rings um die Achse unabhängig von der Winkelstellung zu halten.

9. Spritzgießvorrichtung zum Herstellen eines Trägers für magnetooptische Aufzeichnungsschichten, wobei der Träger plan und kreissymmetrisch in bezug auf eine Symmetrieachse ausgebildet ist, dadurch gekennzeichnet, daß eine Gußform mit einem Formenhohlraum (31) zum Ausbilden des Trägers (20) vorhanden ist, daß der Formenhohlraum plan ist und ein Zentrum (44) korrespondierend zu der Symmetrieachse (29) aufweist, daß ein Hydraulikmechanismus (43) die Gußform mit der Gießebene horizontal ausrichtet und daß eine Schnecke (37) über einen Rohrkrümmer (38) heißen flüssigen Kunststoff in das Zentrum (44) der Gußform (19) einspritzt, so daß der Kunststoff radial und gleichmäßig durch die Gußform strömt, wodurch die Änderungen der Doppelbrechung des Trägers minimal sind.

10. Spritzgießvorrichtung nach Anspruch 9, dadurch gekennzeichnet, daß die Schnecke und der Rohrkrümmer den Kunststoff in das Zentrum der Gußform derart einspritzen, daß sich der Kunststoff weitgehend unbeeinflußt von der Schwerkraft durch die Gußform horizontal bewegt und die Doppelbrechung des Trägers unabhängig von der Winkelstellung rings um die Achse herum ist.

11. Spritzgießvorrichtung nach Anspruch 9, dadurch gekennzeichnet, daß die Gußform (19) aus einem feststehenden Teil (41) und einem beweglichen Teil (42) besteht, der mit dem Hydraulikmechanismus (43) verbunden ist, und daß die beiden Teile (41, 42) im geschlossenen Zustand den Formenhohlraum (31) einschließen.

12. Spritzgießvorrichtung zum Herstellen eines Trägers für magnetooptische Aufzeichnungsschichten, wobei der Träger plan und kreissymmetrisch in bezug auf eine Symmetrieachse ausgebildet ist, dadurch gekennzeichnet, daß die Spritzgießvorrichtung (22) eine Druckspritzgießvorrichtung mit einer zweiteiligen Gußform (46) ist, die aus einem feststehenden Teil (47) und einem beweglichen Teil (48) besteht, daß in die geöffnete Gußform (46) zentral in einen Formenhohlraum (52) ein Rohling (50) aus heißem, vorgeformtem Kunststoff eingebracht wird, der beim Schließen der Gußform (46) erhitzt und flüssig wird, und daß der flüssige Kunststoff horizontal, symmetrisch und radial durch den Formenhohlraum (52) bis zur Außenkante (55) des Formenhohlraums fließt.

13. Träger für eine magnetooptische Aufzeichnungsschicht und für den Durchlaß von Strahlung zu dieser Schicht für die Aufzeichnung, mit einer scheibenförmigen Gestalt aus Kunststoff, wobei die Scheibe eine Planfläche mit einer dazu senkrechen Symmetrieachse besitzt, dadurch gekennzeichnet, daß der Träger (20) vernachlässigbar kleine Änderungen der Doppelbrechung aufweist, daß die Planfläche (31) die Unterseite des Trägers und eine mit Nuten (34) ausgestattete, der Planfläche gegenüberliegende Fläche die Oberseite des Trägers bilden und daß der Träger aus Polykarbonat besteht.

14. Träger nach Anspruch 13, dadurch gekennzeichnet, daß die Dicke des Trägers (20) bis 2 mm, insbesondere 1,2 mm, beträgt und daß der Trägerdurchmesser bis zu 130 mm ist.

Fig. 1

Fig. 2

AMPLITUDE
DES LESE-
SIGNALS 14

0    X°    Y°

AZIMUTHPOS.
(Grade)

Fig. 3 A

Fig. 3 B

AMPLITUDE
DES LESE-
SIGNALS 25

AZIMUTHPOS. (Grade)

Fig. 4

Fig.5

Fig.6

Fig.7

Fig.8

Fig.9